# EUROPÄISCHE PATENTSCHRIFT

(11) **EP 0 683 934 B1**
(45) Veröffentlichungstag und Bekanntmachung des Hinweises auf die Patenterteilung: **20.11.1996**
(21) Anmeldenummer: 94906132.9
(22) Anmeldetag: 04.02.1994
(51) Int. Cl.: H02M 3/155

(54) **GLEICHSPANNUNGSWANDLER**
D.C. CONVERTER
CONVERTISSEUR CONTINU-CONTINU

(30) Priorität: 13.02.1993 DE 4304384
(43) Veröffentlichungstag der Anmeldung: 29.11.1995
(73) Patentinhaber: ROBERT BOSCH GMBH, 70442 Stuttgart (DE)
(72) Erfinder: KNUETEL, Manfred, D-76744 Wörth am Rhein (DE); PREIS, Karl-Heinrich, D-77830 Bühlertal (DE)
(86) Internationale Anmeldenummer: DE9400105
(87) Internationale Veröffentlichungsnummer: WO9418746

(56) Entgegenhaltungen:
- US-A- 4 257 087
- IEEE TRANS. ON INDUSTRIAL ELECTRONICS, Bd.36, Nr.4, November 1989, NEW YORK, US Seiten 568 - 578, XP71495 KAZIMIERCZUK 'Resonant dc/dc converter with class-E inverter and class-E rectifier'

## Beschreibung

### STAND DER TECHNIK

Die Erfindung betrifft einen getakteten Gleichspannungswandler mit einem Wandlungstransformator nach der Gattung des Hauptanspruchs.

In dem IEEE Report "IAS Annual Meeting" 2.-6. Oktober 1977. Los Angeles, S. 1113. ist ein derartiger Gleichspannungswandler beschrieben. der als Abwärtswandler ausgebildet ist und bei dem ein Transformatorkern nur zwei Wicklungen besitzt. Die Verbindung zum ausgangsseitigen Glättungskondensator erfolgt über eine separate Drossel. Hierdurch, sind zum einen zwei induktive Bauelemente erforderlich. und zum anderen kann die Leistungsübertragung zum Ausgang hin nur kapazitiv erfolgen.

Zur derartiger Gleichspannungswandler ist auch aus den IEEE Transactions on Industrial Electronics, Vol. 36, Nr.4, Nov. 1989, S568-578 bekannt.

### VORTEILE DER ERFINDUNG

Der erfindungsgemäße Gleichspannungswandler mit den kennzeichnenden Merkmalen des Hauptanspruchs hat demgegenüber den Vorteil, daß als einziges induktives Bauelement lediglich der Wandlertransformator erforderlich ist. Neben der hierdurch bewirkten Bauteilreduzierung tritt der zusätzliche Vorteil auf, daß die Leistungsübertragung zum Ausgang nicht nur kapazitiv erfolgt, sondern daß zusätzlich auch magnetische Energie über den Wandlertransformator übertragen wird. Dies führt zu einem besseren Wirkungsgrad bei Verwendung eines Niedervolt-Transistors mit geringen Durchlaßverlusten. Durch die Ausbildung des Wandlertransformators ist ein Ausgangsstrom mit sehr geringer Welligkeit erreichbar, wodurch sich die Möglichkeit ergibt, einen kleineren Ausgangskondensator zu verwenden. Beim Öffnen des Leistungsschalters erfolgt ein geringeres Überschwingen der Spannung an diesem Leistungsschalter, was zu geringeren Schaltverlusten führt und eine geringere Spannungsreserve möglich macht. Der Ausgang weist einen Stromquellencharakter auf. das heißt, der Ausgangsstrom wird bei Lastwechsel begrenzt.

Durch die in den Unteransprüchen aufgeführten Maßnahmen sind vorteilhafte Weiterbildungen und Verbesserungen des im Hauptanspruch angegebenen Gleichspannungswandlers möglich.

Die Spannung an der dritten Wicklung muß immer so gepolt sein, daß während der Aufladephase des Längskondensators der Glättungskondensator nicht entladen wird. Dies wird dadurch erreicht, daß die Windungszahl (n3) der dritten Wicklung im wesentichen der Summe der Windungszahlen (nl. n2) der ersten und zweiten Wicklung entspricht. Weiterhin müssen alle drei Wicklungen sehr gut gekoppelt sein. Hierzu werden die Windungen in vorteilhafter Weise parallel gewickelt, wobei die Aufteilung in die drei einzelnen Wicklungen und deren jeweilige Polarität durch entsprechende Beschaltung der Wicklungsenden gebildet wird. Für die Wicklung hat sich eine viel-strängige HF-Litze besonders bewährt. Um den Widerstand der ersten Wicklung möglichst gering zu machen, weist diese mehrere parallele Wicklungsstränge auf. Um auf einfache Weise die Windungszahlen für die anderen Wicklungen zu verdoppeln bzw. zu verdreifachen, werden bei diesen parallel gewickelte Wicklungsstränge in Reihe geschaltet. Durch eine solche Optimierung des Transformators wird die Streuinduktivität reduziert und damit die Schaltverluste am Schalttransistor reduziert.

Besonders bewährt hat sich ein Verhältnis der Windungszahlen (n1, n2, n3) der drei Wicklungen von im wesentlichen 1 : 2 : 3.

Als Leistungsschalter wird vorzugsweise ein schneller Leistungstransistor eingesetzt, insbesondere ein MOSFET. Dieser kann zeit- und/oder stromabhängig getaktet werden.

Als Diode wird in vorteilhafter Weise eine schnelle Hochvoltdiode verwendet. Der Längskondensator sollte eine hohe Güte aufweisen.

### ZEICHNUNG

Ein Ausführungsbeispiel der Erfindung ist in der Zeichnung dargestellt und in der nachfolgenden Beschreibung näher erläutert. Es zeigen:
- Fig. 1: eine Schaltungsausführung des ersten Ausführungsbeispiels, bei dem die Spannungsverhältnisse bei geöffnetem Leistungstransistor dargestellt sind, und
- Fig. 2: dasselbe Ausführungsbeispiel, bei dem die Spannungsverhältnisse bei geschlossenem Leistungstransistor dargestellt sind.

### BESCHREIBUNG DES AUSFÜHRUNGSBEISPIELS

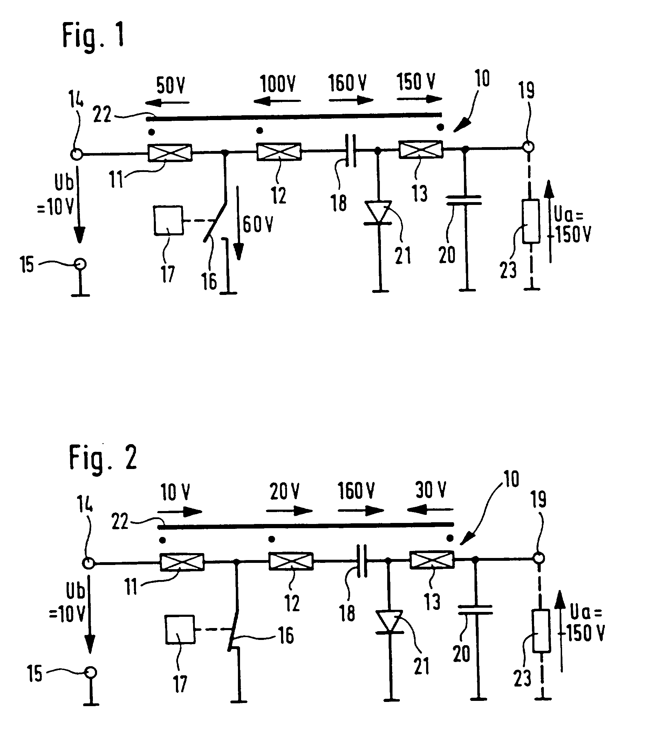

Der in den Fig. 1 und 2 dargestellte Gleichspannungswandler besitzt einen Wandlertransformator 10, der eine erste Wicklung 11, eine zweite Wicklung 12 und eine dritte Wicklung 13 aufweist. Dabei bilden die erste Wicklung 11 und die zweite Wicklung 12 eine geteilte Primärwicklung, während die dritte Wicklung 13 eine Sekundärwicklung darstellt. Eine Eingangsspannung Ub von beispielsweise 10 Volt liegt zwischen einer mit der ersten Wicklung 11 verbundenen ersten Eingangsklemme 14 und einer mit Masse verbundenen zweiten Eingangsklemme 15. Der Verknüpfungspunkt zwischen der ersten Wicklung 11 und der zweiten Wicklung 12 liegt über einen als Leistungstransistor ausgebildeten Leistungsschalter 16 an Masse. Als Leistungsschalter eignet sich beispielsweise der im Handel erhältliche Leistungs-MOSFET IRLZ 44.

In an sich bekannter Weise wird der Leistungsschalter 16 mittels einer Tektschaltung 17 getaktet. Im einfachsten Falle wird diese Taktung durch eine Steuerspannung mit einem festen Testverhältnis getaktet. Dies ist insbesondere dann möglich. wenn ein festes Verhältnis zwischen Eingangsspannung und ausgangsspannung vorliegt. Im allgemeinen wird die Taktung jedoch so vorgenommen. daß entweder der Leistungsschalter 16 geschlossen ist, bis ein bestimmter Wert des durchfließenden Stroms erreicht wird, und es schließt sich dann eine konstante Öffnungszeit an. Eine andere Möglichkeit besteht darin, eine feste Schließzeit vorzugeben, und die nächste Schließzeit dann zu starten, wenn der Strom auf einen bestimmten Wert abgesunken ist. beispielsweise auf den Wert Null.

Der von der ersten Wicklung 11 abgewandte Anschluß der zweiten Wicklung 12 ist über die Reihenschaltung eines Längskondensators 18 mit der entgegengesetzt zu den ersten beiden Wicklungen 11, 12 gepolten dritten Wicklung 13 an eine Ausgangsklemme 19 angeschlossen, wobei zwischen dieser und Masse ein Glättungskondensator 20 geschaltet ist. Eine als Hochvoltdiode geschaltete Diode 21 ist zwischen dem Verknüpfungspunkt zwischen dem Längskondensator 18 mit der dritten Wicklung 13 und Masse geschaltet.

Ein Magnetkern bzw. Transformatorkern 22 ist schematisch dargestellt und trägt die drei Wicklungen 11,12,13.

Die am Glättungskondensator 20 anliegende Ausgangsspannung Ua von beispielsweise -150 Volt kann an einen schematisch dargestelten Verbraucher 23 angelegt werden. Um eine sehr gute Kopplung der drei Wicklungen 11-13 zu erreichen, werden diese parallel gewickelt, beispielsweise unter Verwendung einer 9-strängigen HF-Litze. Nach dem Wickeln werden dann die drei Wicklungen 11-13 durch entsprechendes Verloten der 18 freien Enden der HF-Litze gebildet. Zur Erzielung eines geringen Widerstands der ersten Wicklung 11 werden hierzu 4 Stränge der Litze parallelgeschaltet. Die zweite Wicklung 12 soll eine doppelte Windungszahl aufweisen. was durch Serienschaltung von 2 weiteren Strängen erreicht wird. Schließlich soll die dritte Wicklung 13 eine gegenüber der ersten Wicklung 11 dreifache Windungszahl aufweisen. was durch Serienschaltung von 3 weiteren Strängen erreicht wird. Durch Verseilung der Einzeladern kann eine weitere Verbesserung des Kopplungsfaktors erreicht werden.

Beim dargestellten Ausführungsbeispiel wird von einer Eingangsspannung von 10 Volt ausgegangen, also beispielsweise von der Batteriespannung eines Kraftfahrzeugs. Es soll eine negative Gleichspannung von -150 Volt als Ausgangsspannung Ua gebildet werden. Die Windungszahlen (n1, n2, n3) der drei Wicklungen 11-13 verhalten sich wie 1 : 2 : 3. Prinzipiell könnten auch andere Verhältnisse vorliegen.

Zunächst sei der Leistungsschalter 16 geschlossen. Die erste Wicklung 11 liegt dadurch an der Eingangsspannung Ud, der Strom durch die erste Wicklung steigt an, und es wird Energie in dieser ersten Wicklung gespeichert.

Wird der Leistungsschalter 16 dann geöffnet, so kommutiert der Strom des Leistungsschalters 16 auf die zweite Wicklung 12 und lädt den Längskondensator 18 über die leitende Diode 21 auf eine positive Spannung von im Beispiel 160 Volt auf.

Wird der Leistungsschalter 16 nun wieder geschlossen, so liegt die erste Wicklung 11 wieder an der Eingangsspannung Ub, die linke Seite des Längskondensators 18 liegt über die zweite Wicklung 12 und den Leistunjsschalter 16 auf einer Spannung von -2 . Ub. also auf -20 Volt, da der aus den Wicklungen 11 und 12 gebildete Teiltransformator ein Übersetzungsverhältnis von 2 aufweist. An der Diode 21 liegt eine negative Spannung von -180 Volt, so daß diese sperrt. Der Glättungskondensator 20 liegt nun über die in der dritten Wicklung 13 induzierte Spannung von -30 Volt - der aus der ersten Wicklung 11 und der dritten Wicklung 13 gebildete Teiltransfomator hat ein Übersetzungsverhältnis von 3 - an dieser negativen Spannung. Es ergibt sich daher eine Ausgangsspannung Ua von -150 Volt (die negative Kondensatorspannung am Längskondensator 18 vermindert um die Eingangsspannung Ub).

Wie man aus diesem Ablauf erkennen kann, ist hier die Spannung an der dritten Wicklung 13 immer so gepolt, daß während der Aufladephase des Längskondensators 18 der Glättungskondensator 20 nicht entladen wird. Bedingung hiefür ist zum einen, daß für die Windungszahlen n3 = n2 + n1 gilt und daß alle drei Teilwicklungen sehr gut gekoppelt sein müssen. Dies wird durch das vorstehend beschriebene Wicklungsverfahren erricht. Der Längskondensator 18 sollte wegen der Wechselstrombelastung einen möglichst kleinen Verlustfaktor aufweisen.

## Patentansprüche

1. Gleichspannungswandler mit einem Wandlungstransformator, dessen erste Wicklung in Reihe'mit einem getakteten Leistungsschalter von einer Eingangsspannung beaufschlagt wird, wobei die erste und eine gleichgepolte zweite Wicklung (11,12) in Reihe mit einem Längskondensator (18) und einer Diode (21) einen Ladestromkreis für den Längskondensator bei geöffnetem Leistungsschalter (16) bilden, und mit einem Glättungskondensator (20) am Ausgang des Gleichspannungswandlers, dadurch gekennzeichnet, daß die aus der ersten Wicklung (11), der zweiten Wicklung (12) und dem Längskondensator (18) bestehende Reihenschaltung über wenigstens eine gegensinnig gepolte dritte Wicklung (13) an den Glättungskondensator (20) angeschlossen ist und daß alle Wicklungen (11,12,13) auf einem Magnetkern (22) angeordnet sind.

2. Gleichspannungswandler nach Anspruch 1, dadurch gekennzeichnet, daß die Windungszahl (n3) der dritten Wicklung (13) im wesentlichen der Summe der Windungszahlen (nl, n2) der ersten (11) und zweiten Wicklung (12) entspricht.

3. Gleichspannungswandler nach Anspruch 1 oder 2, dadurch gekennzeichnet, daß das Verhältnis der Windungszahlen (nl, n2, n3) der drei Wicklungen (11-13) im wesentlichen 1 : 2 : 3 beträgt.

4. Gleichspannungswandler nach einem der vorhergehenden Ansprüche, dadurch gekennzeichnet, daß der Leistungsschalter (16) als schneller Leistungstransistor, insbesondere als MOSFET, ausgebildet ist.

5. Gleichspannungswandler nach Anspruch 4, dadurch gekennzeichnet, daß der Leistungsschalter (16) zeit- und/oder stromabhängig getaktet wird.

6. Gleichspannungswandler nach einem der vorhergehenden Ansprüche, dadurch gekennzeichnet, daß die Diode (21) als schnelle Hochvoltdiode ausgebildet ist.

7. Gleichspannungswandler nach einem der vorhergehenden Ansprüche, dadurch gekennzeichnet, daß die Wicklungen (11-13) zur guten Koppplung parallel gewickelt sind, wobei die Aufteilung in die drei einzelnen Wicklungen (11-13) und deren jeweilige Polarität durch entsprechende Beschaltung der Wicklungsenden gebildet wird.

8. Gleichspannungswandler nach Anspruch 7, dadurch gekennzeichnet, daß die Wicklungen (11-13) aus einer viel-strängigen HF-Litze bestehen.

9. Gleichspannungswandler nach Anspruch 7 oder 8. dadurch gekennzeichnet, daß wenigstens die erste Wicklung (11) mehrere parallele Micklungsstränge aufweist.

10. Gleichspannungswandler nach einem der Ansprüche 7 bis 9, dadurch gekennzeichnet, daß zur Verdoppelung und/oder Verdreifachung von Windungszahlen parallel gewickelte Wicklungsstränge in Reihe geschaltet sind.

11. Gleichspannungswandler nach einem der Ansprüche 7 bis 10, dadurch gekennzeichnet, daß die einzelnen Adern der Wicklungen (11-13) verseilt sind.

## Claims

1. DC/DC converter having a conversion transformer whose first winding is loaded by an input voltage in series with a clock power switch, the first winding (11) and a second winding (12) of the same polarization in series with a series capacitor (18) and a diode (21) forming a charging current circuit for the series capacitor when the power switch (16) is opened, and having a smoothing capacitor (20) at the output of the DC/DC converter, characterized in that the series circuit consisting of the first winding (11), the second winding (12) and the series capacitor (18) is connected via at least one third winding (13), polarized in the opposite sense, to the smoothing capacitor (20) and in that all the windings (11, 12, 13) are arranged on one magnetic core (22).

2. DC/DC converter according to Claim 1, characterized in that the number of turns (n3) of the third winding (13) essentially corresponds to the sum of the number of turns (nl, n2) of the first (11) and second winding (12).

3. DC/DC converter according to Claim 1 or 2, characterized in that the ratio of the numbers of turns (nl, n2, n3) of the three windings (11-13) is essentially 1:2:3.

4. DC/DC converter according to one of the preceding claims, characterized in that the power switch (16) is designed as a fast power transistor, in particular as a MOSFET.

5. DC/DC converter according to Claim 4, characterized in that the power switch (16) is clocked as a function of time and/or current.

6. DC/DC converter according to one of the preceding claims, characterized in that the diode (21) is designed as a fast high-voltage diode.

7. DC/DC converter according to one of the preceding claims, characterized in that the windings (11-13) are wound in parallel for the purpose of good coupling, the division into the three individual windings (11-13) and their respective polarity being formed by means of corresponding connection of the ends of the windings.

8. DC/DC converter according to Claim 7, characterized in that the windings (11-13) consist of a multistranded RF flexible wire.

9. DC/DC converter according to Claim 7 or 8, characterized in that at least the first winding (11) has a plurality of parallel winding strands.

10. DC/DC converter according to one of Claims 7 to 9, characterized in that, to double and/or triple the numbers of turns, winding strands wound in parallel are connected in series.

11. DC/DC converter according to one of Claims 7 to 10, characterized in that the individual wires of the windings (11-13) are twisted.

## Revendications

1. Convertisseur continu-continu comprenant un transformateur convertisseur dont le premier enroulement reçoit la tension d'entrée par l'intermédiaire d'un interrupteur de puissance cadencé, le premier et le second enroulement (11, 12) de même polarité forment en série avec un condensateur série (18) et une diode (21), un circuit de courant de charge pour le condensateur série lorsque l'interrupteur de puissance (16) est ouvert et avec un condensateur de lissage (20) à la sortie du convertisseur continu-continu,
caractérisé en ce que
le montage en série, composé du premier enroulement (11), du second enroulement (12), et du condensateur série (18), est relié par au moins un troisième enroulement (13) à polarité opposée au condensateur de lissage (20) et tous les enroulements (11, 12, 13) sont montés sur un noyau magnétique (22).

2. Convertisseur continu-continu selon la revendication 1,
caractérisé en ce que
le nombre de spires (n3) du troisième enroulement (13) correspond pratiquement à la somme des nombres de spires (n1, n2) du premier enroulement (11) et du second enroulement (12).

3. Convertisseur continu-continu selon la revendication 1 ou 2,
caractérisé en ce que
le rapport du nombre de spires (n1, n2, n3) des trois enroulements (11-13) est pratiquement égal à 1 : 2 : 3.

4. Convertisseur continu-continu selon l'une des revendications précédentes,
caractérisé en ce que
l'interrupteur de puissance (16) est un transistor de puissance rapide, notamment un transistor MOSFET.

5. Convertisseur continu-continu selon la revendication 4,
caractérisé en ce que
l'interrupteur de puissance (16) est commandé en cadence en fonction du temps et/ou de l'intensité.

6. Convertisseur continu-continu selon l'une des revendications précédentes,
caractérisé en ce que
la diode (21) est une diode haute tension, rapide.

7. Convertisseur continu-continu selon l'une des revendications précédentes,
caractérisé en ce que
les enroulements (11-13) sont enroulés en parallèle pour assurer un bon couplage et la répartition entre trois enroulements séparés (11-13) et leur polarité respective se fait par le branchement correspondant des extrémités des enroulements.

8. Convertisseur continu-continu selon la revendication 7,
caractérisé en ce que
les enroulements (11-13) sont formés par un cordon HF à quatre brins.

9. Convertisseur continu-continu selon la revendication 7 ou 8,
caractérisé en ce que
au moins le premier enroulement (11) comporte plusieurs cordons d'enroulement en parallèle.

10. Convertisseur continu-continu selon l'une des revendications 7 à 9,
caractérisé en ce que
pour doubler et/ou tripler le nombre de spires, on branche en série des cordons enroulés en parallèle.

11. Convertisseur continu-continu selon l'une des revendications 7 à 10,
caractérisé en ce que
les différents brins des enroulements (11-13) sont câblés.
